(19) Europäisches Patentamt

European Patent Office

Office européen des brevets

(11) **EP 1 069 168 B1**

(12) **EUROPEAN PATENT SPECIFICATION**

(45) Date of publication and mention
of the grant of the patent:
**26.01.2005 Bulletin 2005/04**

(51) Int Cl.7: **C09G 1/02**

(21) Application number: **00304246.2**

(22) Date of filing: **19.05.2000**

(54) **Chemical mechanical abrasive composition for use in semiconductor processing**

Chemische-mechanische Schleifzusammensetzung für Halbleiterverarbeitung

Composition abrasive chimio-mécanique pour le traitement de semi-conducteurs

(84) Designated Contracting States:
**DE FR GB IT NL**

(30) Priority: **16.07.1999 CN 99109797**

(43) Date of publication of application:
**17.01.2001 Bulletin 2001/03**

(73) Proprietor: **Eternal Chemical Co., Ltd.**
**San Mimg District, Kaohsiung (TW)**

(72) Inventors:
• **Lee, Tsung-Ho**
**Ping Tong Hsien Taiwan (CN)**
• **Lee, Kang-Hua**
**Kaohsiung, Taiwan (CN)**
• **Yeh, Tsui-Ping**
**Kusan District, Kaohsiung, Taiwan (CN)**

(74) Representative: **Sexton, Jane Helen**
**J.A. KEMP & CO.**
**14 South Square**
**Gray's Inn**
**London WC1R 5JJ (GB)**

(56) References cited:
**EP-A- 0 844 290**         **EP-A- 0 896 042**
**WO-A-98/23697**

• **PATENT ABSTRACTS OF JAPAN vol. 1999, no. 08, 30 June 1999 (1999-06-30) & JP 11 080708 A (FUJIMI INKOOPOREETETSUDO:KK), 26 March 1999 (1999-03-26)**

**Description**

The invention pertains to a chemical mechanical abrasive slurry. The chemical mechanical abrasive slurry is useful in polishing the surface of a semiconductor wafer.

Chemical mechanical polishing (CMP) is a planarization technique which was developed to address the problem associated with the difficulty in focus during a photolithography process for producing integrated circuits owing to the difference in the height of deposited films. Chemical mechanical polishing technique was first applied to the production of the elements with a size in the order of 0.5 microns. With the reduction in the size of elements, the chemical mechanical polishing technique was applicable to an increased number of layers. Until the elements were developed to the order of 0.25 microns, the chemical mechanical polishing became a main and essential planarization technique. In general, the polishing method for producing a wire circuit comprises mounting a semiconductor wafer on a spinning platen equipped with an abrasive head and applying an abrasive slurry comprising abrasive particles and an oxidant to the surface of the wafer to enhance the abrasion efficacy.

U.S. Pat. No. 5,225,034 discloses a chemical mechanical abrasive slurry which comprises $AgNO_3$, solid abrasive particles, and an oxidant selected from $H_2O_2$, HOCl, KOCl, $KMgO_4$, or $CH_3COOOH$. The slurry is used for polishing a copper layer on a semiconductor wafer so as to produce a copper wire on the wafer.

U.S. Pat. No. 5,209,816 discloses a method for polishing an Al- or Ti-containing metal layer with a chemical mechanical abrasive slurry. The abrasive slurry contains, in addition to a solid abrasive material, about 0.1-20% by volume of $H_3PO_4$ and about 1-30% by volume of $H_2O_2$.

U.S. Pat. No. 4,959,113 discloses a method of using an aqueous abrasive composition for polishing metal surfaces. The aqueous abrasive composition comprises water, an abrasive, e.g. $CeO_2$, $Al_2O_3$, $ZrO_2$, $TiO_2$, $SiO_2$, SiC, $SnO_2$, or TiC, and a salt including a metal cation of Group IIA, IIIA, IVA or IVB and an anion of chloride, bromide, iodide, nitrate, sulfate, phosphate or perchlorate. This patent also discloses the use of hydrochloric acid, nitric acid, phosphoric acid or sulfuric acid to adjust the pH of the abrasive composition to be in the range of 1 to 6.

U.S. Pat. No. 5,391,258 discloses an abrasive composition for polishing silicon, silica or silicate composite. The abrasive composition comprises, in addition to abrasive particles, hydrogen peroxide and potassium hydrogen phthalate.

U.S. Pat. No. 5,114,437 discloses a polishing composition for an aluminum substrate comprising an alumina polishing agent having an average particle size of 0.2 to 5 μm, and a polishing accelerator selected from the group consisting of chromium(III) nitrate, lanthanum nitrate, ammonium cerium(III) nitrate, and neodymium nitrate.

U.S. Pat. No. 5,084,071 discloses a chemical mechanical polishing slurry for an electronic component substrate. The polishing slurry comprises no more than 1 weight percent of alumina, abrasive particles (e.g. $SiO_2$, $CeO_2$, SiC, $Si_3N_4$, or $Fe_2O_3$ particles), a transition metal chelated salt (e.g. ammonium iron EDTA) for use as a polishing accelerator, and a solvent for said salt.

U.S. Pat. No. 5,336,542 discloses a polishing composition comprising alumina abrasive particles and a chelating agent selected from the group consisting of polyaminocarboxylic acid (e.g. EDTA) and sodium and potassium salts thereof. The composition may further comprise beohmit or an aluminum salt.

U.S. Pat. No. 5,340,370 discloses a chemical mechanical polishing slurry for tungsten or tungsten nitride film, which comprises an oxidizing agent such as potassium ferricyanide, an abrasive, and water, and has a pH between 2 and 4.

U.S. Pat. No. 5,516,346 discloses a slurry for chemical mechanically polishing a titanium film, said slurry comprising potassium fluoride in a concentration sufficient to complex said titanium film and an abrasive such as silica, and having a pH less than eight.

WO 96/16436 discloses a chemical mechanical polishing slurry which comprises abrasive particles having a median particle diameter less than 0.400 microns, a ferric salt oxidant, and an aqueous surfactant suspension of a mixture of propyleneglycol and methylparaben.

In semiconductor processing, need still exists for abrasive components which are more economical and have high polishing performance.

The invention provides a chemical mechanical abrasive slurry for use in semiconductor processing, which consists essentially of an abrasive, an aqueous medium, an abrasion enhancer which is phosphorous acid, an oxidant, a triazole compound and, optionally, an abrasion co-enhancer selected from an amino acid, a salt thereof, a carboxylic acid, a salt thereof, or a mixture of the acids and/or salts. The chemical mechanical abrasive slurry of the invention can include 70-99.5% by weight of the aqueous medium, 0.1-25% by weight of the abrasive, and 0.01-2% by weight of the abrasion enhancer.

The invention provides chemical mechanical abrasive slurry for use in semiconductor processing, which comprises phosphorous acid as an abrasion enhancer. The chemical mechanical abrasive slurry of the invention can include 70-99.5% by weight of the aqueous medium, 0.1-25% by weight, preferably 0.5-15% by weight, more preferably 0.5-8% by weight of the abrasive, and 0.01-2% by weight, preferably 0.03-1% by weight, and more preferably 0.03-0.5% by weight of the abrasion enhancer. The chemical mechanical abrasive slurry of the invention may further comprise an abrasion co-enhancer selected from an amino acid, a salt thereof, a carboxylic acid, a salt thereof, or a mixture of the acids and/or salts.

phosphorous acid is added to an abrasive slurry, the abrasion rate achieved by the abrasive slurry can be enhanced. Moreover, if the abrasive slurry further comprises an amino acid or a carboxylic acid, the abrasion rate achieved by the abrasive slurry can be further enhanced. However, it has been found that if only an amino acid or a carboxylic acid is added to an abrasive slurry, the abrasion rate achieved by the abrasive slurry cannot be enhanced. Furthermore, it can be known from the examples hereinafter that phosphorous acid has a better abrasion performance than does phosphoric acid have.

The abrasive used in the abrasive slurry of the invention can be any commercially available abrasive agent in particle form, such as $SiO_2$, $Al_2O_3$, $ZrO_2$, $CeO_2$, SiC, $Fe_2O_3$, $TiO_2$, $Si_3N_4$, or a mixture thereof. These abrasive particles normally have a high purity, a high surface area, and a narrow particle size distribution, and thus are suitable for use in abrasive compositions as abrasive agents.

The amino acid or carboxylic acid used in the present invention can be any commercially available one, such as glycine, creatine, alanine, formic acid, acetic acid, propionic acid, butyric acid, valeric acid, hexanoic acid, malonic acid, glutaric acid, adipic acid, citric acid, malic acid, tartaric acid, or oxalic acid.

The chemical mechanical abrasive slurry of the present invention may use water as a medium. In the preparation of the abrasive composition, water, and preferably conventional deionized water, may be used to make the abrasive composition into a slurry.

The chemical mechanical abrasive slurry of the present invention includes an oxidant. The oxidant may be one that is conventionally used in the art. For example, in a copper production process, the abrasive slurry of the present invention may include benzotriazole and/or its derivatives to protect copper from rapid corrosion.

The abrasive composition of the present invention can be prepared by any conventional method. For example, an abrasive slurry can be prepared by first adding abrasive particles to water and continuously stirring the mixture with a high shear force until the abrasive particles are completely suspended in water. Thereafter, an additional amount of water is added to the slurry such that the abrasive particles in the slurry are present in the desired solid content. For example, if an abrasive slurry prepared according to the invention contains 70-99.5% by weight of deionized water, the solid content of the slurry is in the range from 0.5 to 25% by weight, preferably 0.5 to 15% by weight, and more preferably 0.5 to 8% by weight. The additives described above are then introduced into the resultant slurry and the pH of the slurry is adjusted by a base to be in the desired range. For example, when the metal film to be polished is Cu or TaN film, the pH may be adjusted to be in the range of 2.5 to 7.

The present invention will be further described by, but not limited to, the following examples. Any modifications or changes with reference to the present invention which can be easily accomplished by persons skilled in the art will be covered in the domain of the present invention. Examples 2, 3 and 9 to 11 do not fall within the scope of the claims.

**Examples**

Abrasion Test

| A. Apparatus: | IPEC/Westech 472 |
| B. Conditions: | Pressure: 5 psi |
| | Back pressure: 1.5 psi |
| | Temperature: 25°C |
| | Spindle speed: 55 rpm |
| | Platen speed: 50 rpm |
| | Pad type: IC 1400 |
| | Slurry flow: 150 ml/min |
| C. Wafer: | Cu film and TaN film: commercially available from Silicon Valley Microelectronics, Inc., which is obtained by PVD-depositing a Cu film and a TaN film having a thickness of $0.85 \pm 5\%$ micrometers on a 6 inches silicon wafer |
| D. Slurry: | Prepared by mixing each of the slurries of the following examples with 30 % $H_2O_2$ at a volume ratio of 9:1, and uniformly agitating the resultant mixtures |

Abrasion Test Procedure

Both before and after an abrasion test, the thickness of the wafer to be polished should be measured by a thickness measuring means. The sheet resistivity of the metal film is measured by a 4-point probe. The thickness of the film is determined by the following equation:

$$T \times R = \text{resistivity coefficient}$$

wherein T represents film thickness (Å), and R represents sheet resistivity ($\Omega/cm^2$). For various metal films, the resistivity coefficient will be a constant.

The present invention used Model RS 75 of KLA-Tencor Company to determine the metal film thickness. The abrasion rate is determined as follows:

A metal film thickness $T_1$ is first determined by the above apparatus of Model RS75. The film is polished by an exemplified slurry under the above-mentioned conditions for 1 minute. Thereafter, the wafer is cleaned by Evergreen Model 10X commercially available from the Solid State Equipment Corporation. After spray-drying the wafer, a metal film thickness $T_2$ is measured by the apparatus of Model RS75. The abrasion rate of the metal film for the exemplified slurry is represented by $T_1$ - $T_2$.

Example 1

An abrasive slurry was prepared by using fumed silica as the abrasive. The resultant slurry has the following constitution:

fumed silica: 8.0% by weight;
phosphorous acid: 0.2% by weight;
benzotriazole: 0.1% by weight; and
a base to adjust the pH and deionized water: the balance.

The results of abrasion test for the resultant slurry are listed in Table 1.

Example 2

An abrasive slurry having the following constitution was prepared in a manner similar to that described in Example 1:

fumed silica: 8.0% by weight;
glycine: 0.2% by weight;
benzotriazole: 0.1% by weight; and
a base to adjust the pH and deionized water: the balance.

The results of abrasion test for the resultant slurry are listed in Table 1.

Example 3

An abrasive slurry having the following constitution was prepared in a manner similar to that described in Example 1:

fumed silica: 8.0% by weight;
adipic acid: 0.2% by weight;
benzotriazole: 0.1% by weight; and
a base to adjust the pH and deionized water: the balance.

The results of abrasion test for the resultant slurry are listed in Table 1.

Example 4

An abrasive slurry having the following constitution was prepared in a manner similar to that described in Example 1:

> fumed silica: 8.0% by weight;
> phosphorous acid: 0.2% by weight;
> glycine: 0.2% by weight;
> benzotriazole: 0.1% by weight; and
> a base to adjust the pH and deionized water: the balance.

The results of abrasion test for the resultant slurry are listed in Table 1.

Example 5

An abrasive slurry having the following constitution was prepared in a manner similar to that described in Example 1:

> fumed silica: 8.0% by weight;
> phosphorous acid: 0.2% by weight;
> adipic acid: 0.2% by weight;
> benzotriazole: 0.1% by weight; and
> a base to adjust the pH and deionized water: the balance.

The results of abrasion test for the resultant slurry are listed in Table 1.

Example 6

An abrasive slurry having the following constitution was prepared in a manner similar to that described in Example 1:

> fumed silica: 8.0% by weight;
> phosphorous acid: 0.2% by weight;
> formic acid: 0.2% by weight;
> benzotriazole: 0.1% by weight; and
> a base to adjust the pH and deionized water: the balance.

The results of abrasion test for the resultant slurry are listed in Table 1.

Example 7

An abrasive slurry was prepared by using colloidal silica as the abrasive. The resultant slurry has the following constitution:

> colloidal silica: 12.0% by weight;
> phosphorous acid: 0.2% by weight;
> adipic acid: 0.2% by weight;
> benzotriazole: 0.1% by weight; and
> a base to adjust the pH and deionized water: the balance.

The results of abrasion test for the resultant slurry are listed in Table 1.

Example 8

An abrasive slurry was prepared by using fumed alumina as the abrasive. The resultant slurry has the following constitution:

> fumed alumina: 8.0% by weight;
> phosphorous acid: 0.2% by weight;
> benzotriazole: 0.1% by weight; and
> a base to adjust the pH and deionized water: the balance.

The results of abrasion test for the resultant slurry are listed in Table 1.

Example 9

An abrasive slurry having the following constitution was prepared in a manner similar to that described in Example 8:

    fumed alumina: 8.0% by weight;
    glycine: 0.2% by weight;
    benzotriazole: 0.1% by weight; and
    a base to adjust the pH and deionized water: the balance.

The results of abrasion test for the resultant slurry are listed in Table 1.

Example 10

An abrasive slurry having the following constitution was prepared in a manner similar to that described in Example 1:

    fumed silica: 8.0% by weight;
    phosphoric acid: 0.2% by weight;
    glycine: 0.2% by weight;
    benzotriazole: 0.1 % by weight; and
    a base to adjust the pH and deionized water: the balance.

The results of abrasion test for the resultant slurry are listed in Table 1.

Example 11

An abrasive slurry having the following constitution was prepared in a manner similar to that described in Example 1:

    fumed silica: 8.0% by weight;
    phosphoric acid: 0.2% by weight;
    adipic acid: 0.2% by weight;
    benzotriazole: 0.1% by weight; and
    a base to adjust the pH and deionized water: the balance.

The results of abrasion test for the resultant slurry are listed in Table 1.

Table 1

| abrasive slurry | abrasive particle | solid content (wt.%)* | abrasion enhancer and its content (wt.%)* | | pH | Cu-film removal rate (Å/min) | TaN-film removal rate (Å/min) | SiO$_2$-film removal rate (Å/min) |
|---|---|---|---|---|---|---|---|---|
| Example 1 | fumed<br><br>silica | 8 | phosphorous acid<br>benzotriazole | 0.2<br><br>0.1 | 2.5~3.0 | 3175 | 1076 | 49 |
| Example 2 | fumed<br><br>silica | 8 | glycine<br><br>benzotriazole | 0.2<br><br>0.1 | 2.5~3.0 | 918 | 940 | 45 |
| Example 3 | fumed | 8 | adipic acid | 0.2 | 2.5~3.0 | 925 | 959 | 39 |

* weight percent

Table 1   (continued)

| abrasive slurry | abrasive particle | solid content (wt.%)* | abrasion enhancer and its content (wt.%)* | | pH | Cu-film removal rate (Å/min) | TaN-film removal rate (Å/min) | SiO$_2$-film removal rate (Å/min) |
|---|---|---|---|---|---|---|---|---|
| | silica | | benzotriazole | 0.1 | | | | |
| Example 4 | fumed | 8 | phosphorous acid | 0.2 | 2.5~3.0 | 5197 | 1217 | 52 |
| | silica | | glycine | 0.2 | | | | |
| | | | benzotriazole | 0.1 | | | | |
| Example 5 | fumed | 8 | phosphorous acid | 0.2 | 2.5~3.0 | 6002 | 1217 | 47 |
| | silica | | adipic acid | 0.2 | | | | |
| | | | benzotriazole | 0.1 | | | | |
| Example 6 | fumed | 8 | phosphorous acid | 0.2 | 2.5~3.0 | 7524 | 1390 | 148 |
| | silica | | formic acid | 0.2 | | | | |
| | | | benzotriazole | 0.1 | | | | |
| Example 7 | colloidal | 12 | phosphorous acid | 0.2 | 5.0~5.5 | 6867 | 1877 | 1398 |
| | silica | | adipic acid | 0.2 | | | | |
| | | | benzotriazole | 0.1 | | | | |
| Example 8 | fumed | 8 | phosphorous acid | 0.2 | 2.5~3.0 | 4414 | 565 | 177 |
| | alumina | | benzotriazole | 0.1 | | | | |
| Example 9 | fumed | 8 | glycine | 0.2 | 2.5~3.0 | 977 | 584 | 119 |
| | alumina | | benzotriazole | 0.1 | | | | |
| Example 10 | fumed | 8 | phosphoric acid | 0.2 | 2.5~3.0 | 3066 | 922 | 419 |
| | silica | | glycine | 0.2 | | | | |
| | | | benzotriazole | 0.1 | | | | |
| Example 11 | fumed | 8 | phosphoric acid | 0.2 | 2.5~3.0 | 3435 | 938 | 425 |
| | silica | | adipic acid | 0.2 | | | | |
| | | | benzotriazole | 0.1 | | | | |

* weight percent

## Claims

1. A chemical mechanical abrasive slurry for use in semiconductor processing, which consists essentially of an abrasive, an aqueous medium, an abrasion enhancer which is phosphorous acid, an oxidant, a triazole compound and, optionally, an abrasion co-enhancer which is an amino acid or a salt thereof, a carboxylic acid or a salt thereof or a mixture of the acids and/or salts.

2. A slurry according to claim 1 which includes:

   from 70 to 99.5% by weight of the aqueous medium;
   from 0.1 to 25% by weight of the abrasive; and

from 0.01 to 2% by weight of the abrasion enhancer.

3. A slurry according to claim 2 wherein the abrasive is $SiO_2$, $Al_2O_3$, $ZrO_2$, $CeO_2$, SiC, $Fe_2O_3$, $TiO_2$, $Si_3N_4$ or a mixture thereof.

4. A slurry according to any one of the preceding claims, which includes an abrasion co-enhancer which is an amino acid or a salt thereof, a carboxylic acid or a salt thereof or a mixture of the acids and/or salts.

5. A slurry according to claim 4 wherein the amino acid is glycine, creatine or alanine.

6. A slurry according to claim 4 wherein the carboxylic acid is formic acid, acetic acid, propionic acid, butyric acid, valeric acid, hexanoic acid, malonic acid, glutaric acid, adipic acid, citric acid, malic acid, tartaric acid or oxalic acid.

7. A method for polishing the surface of a semiconductor wafer comprising applying a chemical mechanical abrasive slurry according to any one of claims 1 to 6 on the surface of the semiconductor wafer.

8. Use of phosphorous acid as an abrasion enhancer in a chemical mechanical abrasive slurry according to claims 1 to 6.

**Patentansprüche**

1. Chemisch-mechanischer Schleifschlamm zur Verwendung bei der Halbleiterbearbeitung, der im Wesentlichen aus einem Schleifmittel, einem wässrigen Medium, einem Abriebverstärker, bei dem es sich um Phosphorsäure handelt, einem Oxidationsmittel, einer Triazolverbindung und wahlweise einem Abrieb-Coverstärker, bei dem es sich um eine Aminosäure oder um ein Salz davon, eine Carbonsäure oder einem Salz davon oder eine Mischung der Säuren und/oder Salze handelt, besteht.

2. Schlamm gemäß Anspruch 1, der
70 bis 99,5 Gew.% wässriges Medium,
0,1 bis 25 Gew.-% Schleifmittel, und
0,01 bis 2 Gew.-% Abriebverstärker umfasst.

3. Schlamm gemäß Anspruch 2, wobei es sich bei dem Schleifmittel um $SiO_2$, $Al_2O_3$, $ZrO_2$, $CeO_2$, SiC, $Fe_2O_3$, $TiO_2$, $Si_3N_4$ oder eine Mischung davon handelt.

4. Schlamm gemäß einem der vorstehenden Ansprüche, der einen Abrieb-Coverstärker, bei dem es sich um eine Aminosäure oder um ein Salz davon, eine Carbonsäure oder einem Salz davon oder eine Mischung der Säuren und/oder Salze handelt, umfasst.

5. Schlamm gemäß Anspruch 4, wobei es sich bei der Aminosäure um Glycin, Kreatin oder Alanin handelt.

6. Schlamm gemäß Anspruch 4, wobei es sich bei der Carbonsäure um Ameisensäure, Essigsäure, Propionsäure, Buttersäure, Valeriansäure, Capronsäure, Malonsäure, Glutarsäure, Adipinsäure, Zitronensäure, Äpfelsäure, Weinsäure oder Oxalsäure handelt.

7. Verfahren zum Polieren der Oberfläche einer Halbleiterscheibe, umfassend das Aufbringen eines chemisch-mechanischen Schleifschlamms gemäß einem der vorstehenden Ansprüche 1 bis 6 auf der Oberfläche der Halbleiterscheibe.

8. Verwendung von Phosphorsäure als einen Abriebverstärker in einem chemisch-mechanischen Schleifmittel gemäß Ansprüche 1 bis 6.

**Revendications**

1. Boue abrasive chimico-mécanique destinée à être utilisée dans le traitement de semi-conducteurs, qui est constituée essentiellement d'un abrasif, d'un milieu aqueux, d'un activateur d'abrasion qui est de l'acide phosphoreux, d'un oxydant, d'un composé triazole et, de manière facultative, d'un co-activateur d'abrasion qui est un acide aminé ou un sel de celui-ci, un acide carboxylique ou un sel de celui-ci ou un mélange des acides et/ou sels.

2. Boue selon la revendication 1 qui comporte :

de 70 à 99,5 % en poids du milieu aqueux ;
de 0,1 à 25 % en poids de l'abrasif ; et
de 0,01 à 2 % en poids de l'activateur d'abrasion.

3. Boue selon la revendication 2, dans laquelle l'abrasif est $SiO_2$, $Al_2O_3$, $ZrO_2$, $CeO_2$, SiC, $Fe_2O_3$, $TiO_2$, $Si_3N_4$ ou un mélange de ceux-ci.

4. Boue selon l'une quelconque des revendications précédentes, qui comporte un co-activateur d'abrasion qui est un acide aminé ou un sel de celui-ci, un acide carboxylique ou un sel de celui-ci ou un mélange des acides et/ou sels.

5. Boue selon la revendication 4, dans laquelle l'acide aminé est de la glycine, de la créatine ou de l'alanine.

6. Boue selon la revendication 4, dans laquelle l'acide carboxylique est de l'acide formique, de l'acide acétique, de l'acide propionique, de l'acide butyrique, de l'acide valérique, de l'acide hexanoïque, de l'acide malonique, de l'acide glutarique, de l'acide adipique, de l'acide citrique, de l'acide malique, de l'acide tartrique ou de l'acide oxalique.

7. Procédé pour polir la surface d'une plaquette de semi-conducteur comportant l'application d'une boue abrasive chimico-mécanique selon l'une quelconque des revendications 1 à 6 sur la surface de la plaquette de semi-conducteur.

8. Utilisation d'acide phosphoreux en tant qu'activateur d'abrasion dans une boue abrasive chimico-mécanique selon les revendication 1 à 6.